(19) **Europäisches Patentamt / European Patent Office / Office européen des brevets**

(11) **EP 4 603 457 A1**

(12) ## EUROPEAN PATENT APPLICATION
published in accordance with Art. 153(4) EPC

(43) Date of publication:
**20.08.2025 Bulletin 2025/34**

(21) Application number: **23877676.9**

(22) Date of filing: **11.10.2023**

(51) International Patent Classification (IPC):
$C01F\ 7/043$ (2022.01)    $C01D\ 15/04$ (2006.01)
$C01D\ 15/08$ (2006.01)    $H01M\ 10/54$ (2006.01)
$H01M\ 10/052$ (2010.01)    $C22B\ 26/12$ (2006.01)
$B02C\ 23/08$ (2006.01)    $B03C\ 1/02$ (2006.01)

(52) Cooperative Patent Classification (CPC):
B02C 23/08; B03C 1/02; C01D 15/04; C01D 15/08;
C01F 7/043; C22B 26/12; H01M 10/052;
H01M 10/54; Y02W 30/84

(86) International application number:
**PCT/KR2023/015649**

(87) International publication number:
**WO 2024/080753 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022 KR 20220130773**

(71) Applicants:
• **POSCO Holdings Inc.**
**Seoul 06194 (KR)**
• **POSCO Co., Ltd**
**Pohang-si, Gyeongsangbuk-do 37859 (KR)**

(72) Inventors:
• **KIM, Wanyi**
**Seoul 06194 (KR)**
• **KIM, Chun**
**Seoul 06194 (KR)**
• **HAN, Sangwoo**
**Seoul 06194 (KR)**
• **LEE, Juseung**
**Seoul 06194 (KR)**
• **PARK, Joongkil**
**Seoul 06194 (KR)**

(74) Representative: **Pfenning, Meinig & Partner mbB
Patent- und Rechtsanwälte
Theresienhöhe 11a
80339 München (DE)**

(54) **COMPOSITION COMPRISING LITHIUM-CONTAINING COMPOUND, AND BATTERY DISPOSAL METHOD**

(57) The present disclosure relates to a lithium compound for recovering valuable metals and a method of recovering the same, and a method of recovering a lithium compound for recovering valuable metals includes: preparing a battery; freezing and forcibly discharging the battery; shredding the battery into a battery shredded material; and heating the battery shredded material, wherein the heating of the battery is performed in a temperature range of 1,100 to 1,400°C, a degree of vacuum (LogP [atm]) in the heating of the battery is in a range of -4 to 0, a lithium compound recovered through the heating of the battery contains impurities, and the impurities include, by wt%, 1.8 wt% or less (excluding 0 wt%) of Na, 0.06 wt% or less (excluding 0 wt%) of K, 0.62 wt% or less (excluding 0 wt%) of Ca, and 0.47 wt% or less (excluding 0 wt%) of Mg.

FIG. 4

Change in LiF(g) partial pressure

## Description

### [Technical Field]

The present disclosure relates to a waste battery, and in particular, to a composition including lithium-containing compounds extracted from waste battery recycling and a battery processing method.

### [Background Art]

In accordance with an increase in demand for electric vehicles worldwide, the issue of disposal of waste batteries from the electric vehicles is emerging as a social problem. In the case of lithium secondary batteries, which are the main raw materials of the waste batteries, an organic solvent, an explosive substance, and heavy metal materials such as Ni, Co, Mn, and Fe are contained; however, in the case of Ni, Co, Mn, and Li having great scarcity value as valuable metals, a recovery and recycling process after the lithium secondary batteries are discarded is emerging as an important research field.

Specifically, the lithium secondary battery mainly includes copper and aluminum used for a current collector, oxides containing Li, Ni, Co, and Mn constituting a cathode material, and graphite used for an anode material, and includes a separator that separates the cathode material and the anode material and an electrolyte injected into the separator. The electrolyte contains a solvent and a salt, a mixture of carbonate organic substances such as ethylene carbonate and propylene carbonate is mainly used as the solvent, and for example, $LiPF_6$ is used.

In order to utilize the waste batteries, development of a waste battery recycling process of shredding the waste batteries to produce intermediate materials such as a waste battery shredded material or black powder and then performing a post-process to recover valuable metals has been actively conducted.

However, in the waste battery recycling process, although there are differences depending on the number of times the battery is used or conditions of the battery, the waste batteries generally have a voltage of 3.0 to 3.2 V in a fully-discharged state per cell and a voltage close to 4 V in a fully-charged state, and a module or pack obtained by connecting tens to hundreds of cells has a significant amount of residual voltage energy; thus, safety issues related to battery explosion or electric shock arise when physically disassembling the waste batteries by applying external shock.

In order to prevent these issues, after the disassembly, holes are formed in the battery and the battery is discharged in salt water. The batteries that have completed the discharge are subjected to shredding and then subjected to a high-temperature heat treatment to remove water and the electrolyte.

In this case, large amounts of substances such as Na, K, Cl, Mg, and Ca are contained in a salt used in the salt water discharge. Among the substances described above, in particular, Cl is partially removed during the high-temperature heat treatment, but the shredded material of the waste batteries or the black powder, which is a powder in the form of a mixture of Ni-Co-Mn-Li-O oxide and C, obtained by further processing the shredded material to remove Al, Cu, and a portion of the separator, contains impurities such as Na, K, and Mg.

The impurities have a problem in that a concentration of Li is diluted and a recovery rate is reduced due to characteristics of a process of recovering Li from a residual acid leaching solution after recovery of Ni-Co-Mn during an extraction process using acid leaching in a post-process of the waste battery recycling process. Therefore, there is a need for studies on a method to solve the above problem.

In addition, among Li-containing materials, lithium fluoride (LiF) and lithium carbonate ($Li_2CO_3$) are soluble in water, but oxides such as $LiAlO_2$-$Li_5AlO_4$ are not soluble in water. Therefore, when these compounds are mixed, it is required to maximize the recovery of the Li-containing materials by using acid leaching using sulfuric acid rather than water leaching. However, there is a problem that Li compounds are produced in different amounts at high temperatures and a recovery rate of Li decreases due to a loss of Li by vaporization of LiF(g). Accordingly, there is a need for studies on process conditions that may maximize the recovery of Li compounds.

### [Disclosure]

### [Technical Problem]

The present disclosure has been made in an effort to provide a composition including lithium-containing compounds having advantages of efficiently recovering lithium-containing materials, and to this end, minimizing vaporization of LiF and maximizing a ratio of $LiAlO_2$-$Li_5AlO_4$.

The present disclosure has also been made in an effort to provide a method of recovering lithium compounds having the advantages described above.

**[Technical Solution]**

An exemplary embodiment of the present disclosure provides a composition including lithium-containing compounds, the composition including lithium compounds including $LiAlO_2$; and at least one of $Li_2CO_3$, LiF, and $Li_5AlO_4$, wherein a content of $LiAlO_2$ is 12% or more with respect to 100 wt% of a total weight of the composition. In an exemplary embodiment, the composition including lithium-containing compounds may be recovered from a waste battery.

In an exemplary embodiment, contents of $Li_2CO_3$, LiF, and $Li_5AlO_4$ may be 30% or less, 30% or less, and 40% or less, respectively, in terms of wt%. In an exemplary embodiment, a total content of $Li_2CO_3$ and LiF may satisfy 50% or less.

In an exemplary embodiment, the composition including lithium-containing compounds may include lithium-containing compounds satisfying the following Expression 1:

<Expression 1>

$$3.0 \leq ([LiAlO_2] + [Li_5AlO_4])/([LiF] + [Li_2CO_3])) \leq 10.0$$

$[LiAlO_2]$, $[Li_5AlO_4]$, $[LiF]$, and $[Li_2CO_3]$ represent crystal phase ratios of $LiAlO_2$, $Li_5AlO_4$, LiF, and $Li_2CO_3$, respectively.

In an exemplary embodiment, the composition including lithium-containing compounds may satisfy the following Expression 2:

<Expression 2>

$$0.1 \leq I_A/I_B \leq 1.5$$

$I_A$ represents a peak intensity value of $2\theta = 21° \pm 0.5°$ of $LiAlO_2$ product, and $I_B$ represents a peak intensity value of $2\theta = 32.6° \pm 0.4°$ of $LiAlO_2$ product.

In an exemplary embodiment, the composition including lithium-containing compounds may satisfy the following Expression 3:

<Expression 3>

$$[Al] = 0.3702 × [Li] + 0.0832 ± 0.5$$

[Al] and [Li] represent moles of Al and Li, respectively.

Another exemplary embodiment of the present disclosure provides a battery processing method including: preparing a battery; shredding the battery into a battery shredded material; and performing a high-temperature heat treatment on the battery shredded material, wherein the high-temperature heat treatment is performed at a temperature of 1,100 to 1,500°C in a gas atmosphere having an oxygen concentration of 0.4 to 0.8%. In an exemplary embodiment, the preparing of the battery may include freezing the battery, and, the freezing of the battery may satisfy the following Expression 4:

<Expression 4>

$$\text{Minimum cooling time (Hr)} = A × (W^{0.33})$$

A represents $4 × e^{(-0.02 × dT)}$, W represents a battery weight (Kg), dT represents | external cooling temperature - target temperature |, and | | represents an absolute value.

In an exemplary embodiment, the freezing of the battery may include cooling the battery to -150°C to -20°C. In an exemplary embodiment, the preparing of the battery may include performing forced discharge on the battery.

In an exemplary embodiment, the battery processing method may further include, after the high-temperature heat treatment, obtaining a composition including lithium compounds remaining after separating a nickel alloy through magnetic separation. In an exemplary embodiment, the acidic solution may satisfy a pH of 4 or lower.

In an exemplary embodiment, the composition including lithium compounds obtained by the high-temperature heat treatment may have a leaching rate of 95% or more in an acidic solution having a pH of 4 or lower. In an exemplary embodiment, in the battery processing method, a composition including lithium compounds obtained by the high-temperature heat treatment may satisfy the following Expression 1:

<Expression 1>

$$3.0 \leq ([LiAlO_2] + [Li_5AlO_4])/([LiF] + [Li_2CO_3])) \leq 10$$

$[LiAlO_2]$, $[Li_5AlO_4]$, $[LiF]$, and $[Li_2CO_3]$ represent crystal phase ratios of $LiAlO_2$, $Li_5AlO_4$, $LiF$, and $Li_2CO_3$, respectively.

In an exemplary embodiment, lithium compounds obtained by the high-temperature heat treatment may satisfy the following Expression 3:

<Expression 3>

$$[Al] = 0.3702 \times [Li] + 0.0832 \pm 0.5$$

$[Al]$ and $[Li]$ represent moles of Al and Li, respectively.

**[Advantageous Effects]**

According to an exemplary embodiment of the present disclosure, lithium-containing compounds having excellent stability at a high temperature are secured by controlling content ratios of compounds in lithium-containing materials according to a temperature, oxygen, and holding time, thereby providing lithium-containing compounds having an excellent lithium recovery rate.

According to another exemplary embodiment of the present disclosure, there is provided a method of recovering lithium-containing compounds having the advantages described above.

**[Description of the Drawings]**

FIG. 1 is a graph showing a change in battery voltage according to a cooling temperature according to an exemplary embodiment of the present disclosure.

FIG. 2 is a graph showing a relationship between a battery weight, an external cooling temperature, and a cooling time according to an exemplary embodiment of the present disclosure.

FIGS. 3A and 3B are photographs showing a fire that occurred when shredding was performed after freezing for a shorter time than a minimum cooling time according to a comparative example of the present disclosure, and FIGS. 3C and 3D are photographs showing an example in which a fire did not occur when shredding was performed after freezing for a longer time than the minimum cooling time according to an example of the present disclosure.

FIG. 4 illustrates a change in LiF(g) partial pressure in a high-temperature heat treatment according to an exemplary embodiment of the present disclosure.

FIG. 5 illustrates content ratios of $LiAlO_2$ and $Li_5AlO_4$ according to a content of oxygen in a high-temperature heat treatment at 1,600°C according to an exemplary embodiment of the present disclosure.

FIG. 6 illustrates a Li-Al-$H_2$O EH-pH diagram according to an exemplary embodiment of the present disclosure.

FIG. 7 illustrates a graph for deriving an expression of relation according to a molar ratio of Li and Al in a Li-Al-O compound according to an exemplary embodiment of the present disclosure.

FIG. 8 illustrates XRD analysis results of lithium compounds according to an exemplary embodiment of the present disclosure.

**[Mode for Invention]**

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning.

The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

In addition, unless specifically stated otherwise, % used in the present specification refers to "wt%".

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present disclosure will be described in detail. However, these exemplary embodiments are provided as examples, and the present disclosure is not limited by these exemplary embodiments and is defined by only the scope of the claims to be described below.

According to an exemplary embodiment of the present disclosure, a composition includes lithium-containing compounds. Specifically, the lithium-containing compounds include lithium aluminum oxide. The lithium-containing compounds include lithium-containing compounds produced by a battery processing method described below, for example, lithium-containing compounds recovered from a waste battery. The lithium aluminum oxide may be $LiAlO_2$ or $Li_5AlO_4$, for example, $LiAlO_2$. In an exemplary embodiment, the lithium-containing compounds may further include at least one of $Li_2CO_3$, LiF, and $Li_5AlO_4$.

$LiAlO_2$ may be included in an amount of 12% or more with respect 100 wt% of a total weight of the composition. $LiAlO_2$ may be included in an amount of, specifically, 45%, and more specifically, 70% or more.

When the content of $LiAlO_2$ satisfies the above range, a stable product is secured under a high-temperature and appropriate oxygen concentration atmosphere, such that an actual yield of lithium may be increased. When the high-temperature and oxygen concentration atmosphere are not appropriate, there is a problem of Li loss due to vaporization of LiF or the production of a large amount of compounds that are difficult to recover due to water solubility problems, such as $Li_2CO_3$ and LiF, which may cause a reduction in lithium recovery rate. In an exemplary embodiment, $Li_2CO_3$ may be included in an amount of 30% or less with respect 100 wt% of the total weight of the composition. $Li_2CO_3$ may be included in an amount of 15.0% or less, and more specifically, 5% or less. When the content of $Li_2CO_3$ satisfies the above range, it is possible to prevent the production of a large amount of compounds that are difficult to recover due to water solubility problems. In an exemplary embodiment, LiF may be included in an amount of 30 wt% or less with respect 100 wt% of the total weight of the composition. In an exemplary embodiment, LiF may be included in an amount of 19 wt%, and specifically, 17 wt% or less, with respect 100 wt% of the total weight of the composition. When the content of LiF satisfies the above range, it is possible to prevent the production of a large amount of compounds that are difficult to recover due to water solubility problems.

In an exemplary embodiment, a total content of $Li_2CO_3$ and LiF may be 50% or less in terms of wt%. Specifically, the total content may be 0.5 to 50%, and more specifically, 0.5 to 30%. When the total content of $Li_2CO_3$ and LiF satisfies the above range, the production of a large amount of compounds that are difficult to recover due to water solubility problems is prevented, and the high temperature and oxygen concentration are appropriately controlled, such that a large amount of stable compounds having an excellent leaching rate in sulfuric acid are produced, thereby increasing the efficiency of lithium recovery.

In an exemplary embodiment, the composition including lithium-containing compounds may satisfy the following Expression 1:

<Expression 1>

$$3.0 \leq ([LiAlO_2] + [Li_5AlO_4])/([LiF] + [Li_2CO_3])) \leq 10.0$$

$[LiAlO_2]$, $[Li_5AlO_4]$, $[LiF]$, and $[Li_2CO_3]$ represent crystal phase ratios of $LiAlO_2$, $Li_5AlO_4$, LiF, and $Li_2CO_3$, respectively.

Expression 1 is an expression of relation for ratios of crystal phases of lithium-containing compounds in the composition including lithium-containing compounds, which are reactants produced through a high-temperature reduction reaction described below. Expression 1 may satisfy 3.0 to 10.0, specifically, 3.60 to 7.50, and more specifically, 3.64 to 7.07.

When Expression 1 is satisfied, the composition including lithium-containing compounds of the present disclosure promotes the formation of crystal phases of $LiAlO_2$ and $Li_5AlO_4$, which is advantageous for improving an actual yield of lithium. When the content of Expression 1 is not satisfied, specifically, when the value is lower than the content of Expression 1, there is a problem that an actual yield of lithium decreases as LiF vaporizes.

**In** an exemplary embodiment, the composition including lithium-containing compounds may satisfy the following Expression 2:

<Expression 2>

$$0.1 < I_A/I_B < 1.5$$

wherein $I_A$ represents a peak intensity value of $2\theta = 21° \pm 0.5°$ of $LiAlO_2$ product, and $I_B$ represents a peak intensity value of $2\theta = 32.6° \pm 0.4°$ of $LiAlO_2$ product.

Expression 2 is an expression of relation for a ratio of peak intensity values at a specific angle of $LiAlO_2$, which is a lithium oxide in the composition including lithium-containing compounds, which is a reactant produced through a high-temperature reduction reaction described below. Expression 2 may satisfy 0.1 to 1.5, specifically, 0.3 to 1.5, and more specifically, 0.7 to 1.3.

In an exemplary embodiment, $LiAlO_2$ may have at least one of XRD peaks of 20.5 to 21.5°, 29.0 to 29.5°, 31.5 to 32.0°, 32.2 to 33.0°, 60.5 to 61.5°, and 70.0 to 72.0°. $Li_5AlO_4$ may have at least one of XRD peaks of 19.5 to 20.2° and 21.6 to 22.2°. The LiF composition may have at least one of XRD peaks of 37.5 to 40.2°, 43.9 to 46.5°, and 64.5 to 66.5°. The $Li_2CO_3$ composition may have at least one of XRD peaks of 24.0 to 26.0°, 27.0 to 29.0°, 34.0 to 36.0°, and 37.0 to 39.0°.

In an exemplary embodiment, the composition including lithium-containing compounds may satisfy the following Expression 3:

<Expression 3>

$$[Al] = 0.3702 \times [Li] + 0.0832 \pm 0.5$$

[Al] and [Li] represent moles of Al and Li, respectively.

Through Expression 3, it may be confirmed that elements having strong oxidizing power at a high temperature, such as Li and Al, produce a reaction product such as $LiAlO_2$ or $Li_5AlO_4$, which is stable at a high temperature. An upper limit value of Expression 3 may be included in a range of $[Al] = 0.3702 \times [Li] + 0.5832$, and a lower limit value of Expression 3 may be included in a range of $[Al] = 0.3702 \times [Li] - 0.4168$. When Expression 3 is not satisfied, there is a problem that the production of lithium aluminum oxide having strong oxidizing power at a high temperature is reduced.

According to another exemplary embodiment of the present disclosure, a battery processing method includes: preparing a battery; shredding the battery into a battery shredded material; and performing a high-temperature heat treatment on the battery shredded material.

In the preparing of the battery, the battery may be various batteries including lithium ions, and the battery may be, for example, a lithium secondary battery separated from an automobile, a secondary cell battery separated from an electronic device such as a mobile phone, a camera, or a laptop, and specifically, a lithium secondary battery. More specifically, waste batteries are used as the above battery, which has the advantage of being environmentally friendly.

In an exemplary embodiment, the preparing of the battery may include freezing the battery. The freezing of the battery is performed to stabilize an electrolyte in the battery, and has the advantage of reducing a risk of fire occurring during shredding of the battery described below.

In an exemplary embodiment, the freezing of the battery may satisfy the following Expression 4:

<Expression 4>

$$\text{Minimum cooling time (Hr)} = A \times (W^{0.33})$$

A represents $4 \times e^{(-0.02 \times dT)}$, W represents a battery weight (Kg), dT represents | external cooling temperature - target temperature |, and | | represents an absolute value.

The minimum cooling time of Expression 4 means a battery weight, for example, a weight of a battery pack, a single battery, or a combination thereof. The minimum cooling time means an external cooling temperature, which is a cooling temperature applied to the battery, for example, a target temperature for cooling the electrolyte inside the battery.

As the freezing of the battery is performed for a period of longer than the minimum cooling time, even the electrolyte inside the battery is cooled, such that subsequent processes may be performed stably. In the freezing of the battery, when the battery is frozen for a period shorter than the minimum cooling time, the electrolyte is not cooled, which may lead to a risk of fire when shredded.

The freezing of the battery is performed at a temperature sufficient to freeze the electrolyte included in the battery. Specifically, the freezing may be performed in a temperature range of, for example, -150 to -20°C. More specifically, the above temperature range may be -150 to -50°C, and more specifically, -80 to -60°C.

When the battery is frozen in the above temperature range, a micro-voltage remaining inside the battery, for example, a voltage of about 2 V to 3 V drops close to 0 V, and accordingly, even when a short circuit occurs where a cathode and an anode come into direct contact with each other, no battery reaction occurs, and thus, a battery temperature does not increase, which may prevent the occurrence of gas generation and combustion of the electrolyte. In addition, since the electrolyte is in a frozen state or in a state where vaporization is suppressed, the mobility of lithium ions is significantly low, which may significantly reduce conduction characteristics according to the movement of lithium ions, and vaporization of the electrolyte does not occur, which may prevent generation of flammable gases such as ethylene, propylene, and hydrogen.

When the freezing is performed outside the above temperature range, for example, when the battery is cooled to a temperature higher than -60°C, the voltage remaining inside the battery does not drop to 0 V; thus, a battery reaction due to a short circuit may occur, and the electrolyte is not completely frozen, which is not preferable. In addition, when the battery is cooled to -150°C, the electrolyte is sufficiently frozen, and the battery internal voltage drops to 0 V, and therefore, there is no need to lower the temperature lower than this. As described above, the battery processing method includes, before shredding the battery such as a lithium secondary battery, the freezing of the battery, which is advantageous in preventing a risk of fire that may occur during the battery shredding.

The shredding of the battery may mean a process of applying an impact or pressure to the battery so that a portion of the battery falls off. In an exemplary embodiment, the shredding of the battery may mean any of a process of crushing the battery, a process of cutting the battery, a process of compressing the battery, and a combination thereof. Specifically, the shredding of the battery may include any process that may destroy the battery to obtain a small-sized shredded material.

In an exemplary embodiment, the shredding of the battery may include any process of compressing the prepared battery or destroying the battery by applying an external force such as a shear force or a tensile force. The shredding of the battery may be performed using, for example, a shredder.

In an exemplary embodiment, the shredding of the battery may be performed at least one or more times. Specifically, the shredding of the battery may be performed continuously or discontinuously at least one or more times.

In an exemplary embodiment, the shredding of the battery may be performed under conditions of supplying an inert gas, carbon dioxide, nitrogen, water, or a combination thereof, or under vacuum conditions of 100 torr or less. For example, when the freezing of the battery is performed by cooling the battery in a temperature range of -60 to -20°C under the conditions described above, the supply of oxygen may be suppressed and the electrolyte may be prevented from reacting with oxygen, and accordingly, an explosion caused thereby may be prevented, and the vaporization of the electrolyte may be suppressed, such that the generation of flammable gases such as ethylene, propylene, and hydrogen may be prevented.

In an exemplary embodiment, the shredding of the battery may be performed so that the maximum size of the battery shredded material is 100 mm or less. Specifically, the shredding of the battery may be performed so that the size of the battery shredded material is 50 mm or less. When the maximum size of the battery shredded material is more than 100 mm, the temperature of heat generated due to instability as the battery is shredded may rise to a temperature range of 120°C, which is the average vaporization temperature of the electrolyte, which may cause stability problems such as a fire.

In an exemplary embodiment, the preparing of the battery may include performing forced discharge on the battery. The forced discharge is to electrically discharge the battery, and may be performed using a reverse voltage to lower the voltage to 3.2 V or less, thereby lowering the voltage close to 0 V. For example, when the shredding of the battery is performed after the freezing of the battery and the performing of the forced discharge, problems such as electrolyte vaporization during discharge may be prevented.

In the performing of the high-temperature heat treatment on the battery shredded material, the battery shredded material may be introduced into a heating furnace that may heat the battery shredded material to a high temperature, thereby heating the battery shredded material to a temperature higher than a melting point thereof. The high-temperature heat treatment may involve heat treatment conditions that perform a high-temperature reduction reaction without going through melting of the battery.

In an exemplary embodiment, the high-temperature heat treatment on the battery shredded material may be performed in a range of 1,100 to 1,500°C. Specifically, the high-temperature heat treatment may be performed in a range of 1,300 to 1,500°C.

When the temperature is outside the upper limit value of the above range, there is a problem of lithium loss due to lithium vaporization. When the temperature is outside the lower limit value of the above range, sintering and reduction of alloy elements do not proceed smoothly, and a stabilized lithium-containing compound is not formed; thus, it is difficult to recover a stabilized compound when recovering the lithium compounds later.

In an exemplary embodiment, the high-temperature heat treatment of the battery shredded material may be performed in an atmosphere of at least one gas of an inert gas, carbon dioxide, carbon monoxide, a hydrocarbon gas, and oxygen. The inert gas may include, for example, at least one of argon and nitrogen. When a reduction reaction of the shredded material is performed in the gas atmosphere, there is an advantage in that a recovery rate of valuable metal elements contained in the battery shredded material may be increased.

In an exemplary embodiment, the high-temperature heat treatment of the battery shredded material may be performed in a gas atmosphere including at least one of an inter gas, carbon dioxide, carbon monoxide, and a hydrocarbon gas; and oxygen. In an exemplary embodiment, the high-temperature heat treatment of the battery shredded material may be performed in a gas atmosphere with an oxygen concentration of 0.4 to 0.8 vol%. Specifically, the high-temperature heat treatment of the battery shredded material may be performed in a gas atmosphere with an oxygen concentration of 0.4 to 0.6 vol%. As the oxygen concentration increases, the reaction $Li_2O + C + O_2(g) = Li_2CO_3$ is promoted, which causes a decrease in $LiAlO_2$ and $Li_5AlO_4$, and therefore, it is preferable that the oxygen concentration is within the above range.

In addition, as the temperature increases, $Li_5AlO_4$ is generated by the reaction $LiAlO_2(s) + 2Li_2CO_3(s) = Li_5AlO_4 + 2CO_2(g)$, but the $LiF(g)$ vaporization reaction is promoted; thus, the reaction temperature is preferably in a range of 1,000 to 1,500°C. When the oxygen concentration in the gas is outside the upper limit value, carbon dioxide is excessively formed during the reduction reaction and is lost through gasification together with lithium, or the production of $Li_2CO_3(s)$ increases excessively, making it difficult to recover lithium through acid leaching.

In an exemplary embodiment, the performing of the high-temperature heat treatment on the battery shredded material may satisfy the following Expression 4.

In an exemplary embodiment, the battery processing method may further include, after the high-temperature heat treatment, obtaining a composition including lithium compounds remaining after separating a nickel alloy through magnetic separation. Specifically, after the high-temperature heat treatment, a composition including lithium compounds and a powder including a nickel alloy, for example, black powder, may be included. The composition including lithium compounds may be separated by separating the nickel alloy included in the black powder through magnetic separation.

In an exemplary embodiment, the battery processing method may further include recovering lithium by leaching the composition including lithium compounds with an acidic solution. The acidic solution may satisfy a pH of 4 or lower.

When the pH is higher than 4, there is a problem in that a stabilized lithium-containing compound cannot secure a target precipitation rate. The acidic solution may be, for example, sulfuric acid. Specifically, lithium may be recovered by dissolving metals such as aluminum in the lithium compounds by leaching the composition including lithium compounds with the acidic solution.

In an exemplary embodiment, a leaching rate of the composition including lithium-containing compounds in sulfuric acid may be 95% or more. Specifically, the leaching rate of the composition including lithium-containing compounds in sulfuric acid may be 96% or more.

There is an advantage in that the recovery rate of lithium may be maximized by increasing the leaching rate of the composition including lithium-containing compounds.

Hereinafter, preferred examples and comparative examples of the present disclosure will be described. However, each of the following examples is merely a preferred example of the present disclosure, and the present disclosure is not limited to the following examples.

**<Battery Internal Temperature According to Minimum Cooling Time>**

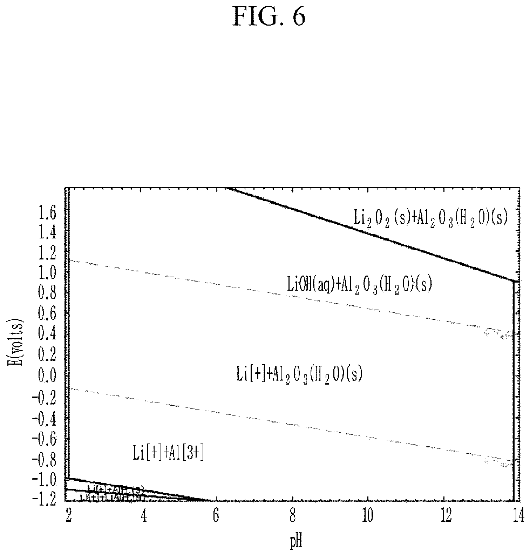

A battery pack used in the example was shredded without freezing using the same shredder as in the example. During the shredding process, a flame occurred due to a short circuit, as illustrated in FIG. 6.

As described above, through Example 1 and Comparative Example 1, it may be confirmed that stability is excellent because freezing of a battery pack including a battery is included before the shredding of the battery, and thus, no short circuit and no flame occur in the shredding of the battery.

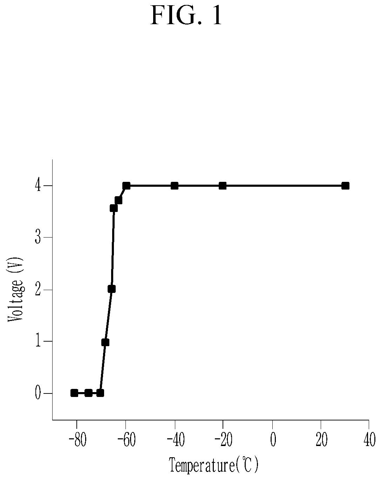

FIG. 1 is a graph showing a change in battery voltage according to a cooling temperature according to an exemplary embodiment of the present disclosure.

Referring to FIG. 1, in the battery processing method according to an exemplary embodiment of the present disclosure, it may be confirmed that, in the freezing of the battery, the minimum cooling time for cooling the battery may be derived. Specifically, it may be confirmed that the minimum cooling time is related to a battery weight, an external cooling temperature, and a target temperature.

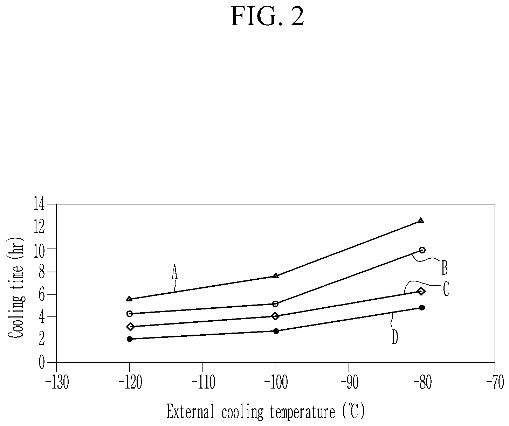

FIG. 2 is a graph showing a relationship between a battery weight, an external cooling temperature, and a cooling time according to an exemplary embodiment of the present disclosure.

Referring to FIG. 2, when the target temperature is set to -70°C and the battery weights are set to 2.5 kg (A), 10 kg (B), 20 kg (C), and 50 kg (D), the external cooling temperature and the minimum cooling time are illustrated. It may be confirmed that, in the cooling of the battery, the electrolyte in the battery begins to cool after a certain period of time and the voltage becomes 0. Through this, it may be confirmed that a minimum holding time is required to sufficiently cool the inside of the battery, specifically, the electrolyte in cooling the battery.

Specifically, in a heat transfer situation for cooling where heat is lost to the outside, considering the specific heat of the battery itself, it may be confirmed that the battery weight and the time for cooling are required. Even in the heat transfer situation for cooling where heat is lost to the outside, considering the specific heat of the battery itself, it may be confirmed that the battery weight and time for cooling are required.

As described above, in the present disclosure, the minimum time required for cooling may be confirmed by using the external cooling time and target temperature for freezing and the battery weight to cool the battery.

Table 1 shows the minimum cooling time according to the battery weight and the external cooling temperature.

[Table 1]

|  | Battery weight [Kg] | External cooling temperature [°C] | Target temperature [°C] | Minimum cooling time [h] |
|---|---|---|---|---|
| A_1 | 2.5 | -120 | -70 | 1.9 |
| A_2 | 2.5 | -100 | -70 | 2.9 |
| A_3 | 2.5 | -80 | -70 | 4.4 |
| B_1 | 10 | -120 | -70 | 3.1 |
| B_2 | 10 | -100 | -70 | 4.6 |
| B_3 | 10 | -80 | -70 | 7.0 |
| C_1 | 20 | -120 | -70 | 3.9 |
| C_2 | 20 | -100 | -70 | 5.8 |
| C_3 | 20 | -80 | -70 | 8.8 |
| D_1 | 50 | -120 | -70 | 5.3 |
| D_2 | 50 | -100 | -70 | 7.9 |
| D_3 | 50 | -80 | -70 | 11.9 |

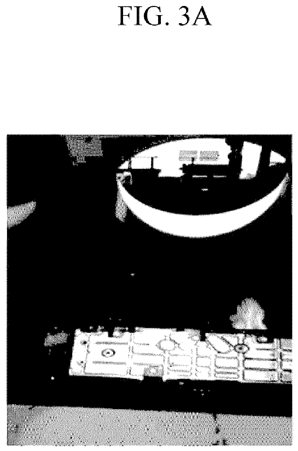

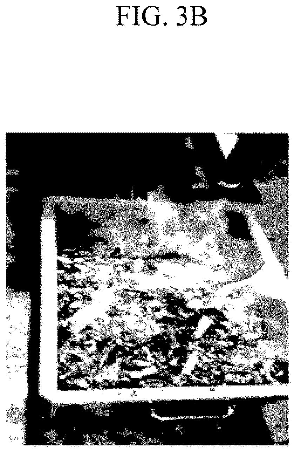

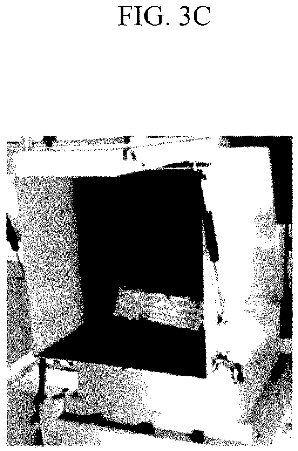

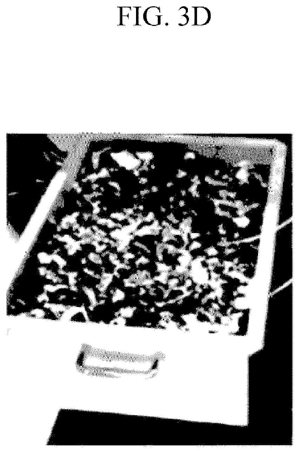

Referring to Table 1, it may be confirmed that the smaller the battery weight, the shorter the minimum cooling time required for the battery to be cooled. In addition, when the battery is cooled for the minimum cooling time derived from the expression of relation between the battery weight, the external cooling temperature, and the target temperature, it may be confirmed that the battery, specifically, even the electrolyte of the battery, is cooled. In addition, when the battery is cooled for a period of time longer than the minimum cooling time shown in Table 1, no fire occurs during the battery shredding process, which is a post-process. FIGS. 3A and 3B are photographs showing a fire that occurred when shredding was performed after freezing for a shorter time than a minimum cooling time according to a comparative example of the present disclosure, and FIGS. 3C and 3D are photographs showing an example in which a fire did not occur when shredding was performed after freezing for a longer time than the minimum cooling time according to an example of the present disclosure. FIGS. 3A and 3B illustrate the experimental results of the fire occurrence state of the shredded material when the shredded material is frozen for a period shorter than the minimum cooling time for cooling the battery. The experiment was conducted for 5 hours, which is lower than the minimum cooling time, in the case where the battery weight was 25 kg, the external cooling temperature was -95°C, the target freezing temperature was -70°C, and the minimum cooling time, which is the value of Expression 4, was 7 hours.

<Expression 4>

$$\text{Minimum cooling time} = A \times (W^{0.33})$$

A represents $4 \times e^{(-0.02 \times dT)}$, W represents a battery weight (Kg), dT represents | external cooling temperature - target temperature |, and | | represents an absolute value.

FIGS. 3C and 3D illustrate the experimental results of the fire occurrence state of the shredded material when the battery is frozen for a period longer than the minimum cooling time required for cooling. The experiment was conducted in the case where the battery weight and the external cooling temperature were the same as those in FIGS. 3A and 3B and the minimum cooling time was 7 hours or longer.

Table 2 shows the results of comparing the fire occurrence states of the example and the comparative example according to the same battery weight, external cooling temperature, and minimum cooling time as those in FIGS. 3A to 3D. For the fire occurrence state, after the battery was shredded, a case where the occurrence of fire was observed was determined as "O", and a case where the occurrence of fire was not observed was determined as "X".

[Table 2]

| | Battery weight [Kg] | External cooling temperature [°C] | Target temperature [°C] | Expression 4 | Actual cooling time [h] | Occurrence of fire |
|---|---|---|---|---|---|---|
| Comparative Example | 25 | - 95 | -70 | 7.0 | 5 | ○ |
| Example | 25 | - 95 | - 70 | 7.0 | 7 | X |

Referring to Table 2, it may be confirmed that when the battery is cooled to a value smaller than the value of Expression 4 corresponding to the minimum cooling time, the electrolyte is not cooled, resulting in a fire after shredding of the battery. As described above, it may be confirmed that when the battery is cooled by setting the value of Expression 4 as the minimum cooling time, the shredded material may be stably used without the occurrence of fire after shredding of the battery.

**<Performing of High-Temperature Heat Treatment- Amount of Li Compounds Produced According to Temperature>**

Through a high-temperature heat treatment reaction, a reduction reaction occurs, and accordingly, reaction products such as $LiAlO_2$, $Li_2CO_3$, LiF, and $Li_5AlO_4$ may be produced. Specifically, the reaction products may be produced by the following Reaction Formulas 1 to 6.

[Reaction Formula 1]        $Li_2O(s) + Al_2O_3(s) = 2LiAlO_2(s)$

[Reaction Formula 2]        $5/2Li_2O(s) + 1/2Al_2O_3(s) = Li_5AlO_4(s)$

[Reaction Formula 3]        $Li_2O(s) + C(s) + O_2(g) = Li_2CO_3(s)$

[Reaction Formula 4]        $Li_2O(s) + 2F(l) = 2LiF(s) + 1/2O_2(g)$

[Reaction Formula 5]        $LiPF_6(l) + H_2O(l) = 2HF(g) + POF_3(g) + LiF(s)$

[Reaction Formula 6]        $LiAlO_2(s) + 2Li_2CO_3(s) = Li_5AlO_4(s) + 2CO_2(g)$

The amounts of reaction products produced according to Reaction Formulas 1 to 6 may vary depending on the temperature and oxygen concentration range. Tables 3 to 7 show the amounts of reaction products according to the heat treatment temperatures when the oxygen concentration is 0.4 vol%, 0.6 vol%, 0.8 vol%, 1.0 vol%, and 1.2 vol%.

[Table 3]

| Temp (°C) | $Li_2CO_3(s)$ [g] | LiF(s) [g] | $LiAlO_2(s)$ [g] | $Li_5AlO_4(s)$ [g] |
|---|---|---|---|---|
| 900 | 10.0 | 14.9 | 76.1 | 0 |
| 1000 | 9.9 | 14.9 | 75.2 | 0 |
| 1100 | 9.7 | 15.2 | 75.1 | 0 |
| 1200 | 9.7 | 14.5 | 74.8 | 0 |
| 1300 | 3.5 | 13.9 | 72.1 | 5.5 |
| 1400 | 2.1 | 12.5 | 71.5 | 6.7 |
| 1500 | 1.3 | 9.1 | 71.1 | 7.4 |
| 1600 | 0 | 0 | 70.5 | 8.5 |

[Table 4]

| Temp (°C) | $Li_2CO_3(s)$ [g] | LiF(s) [g] | $LiAlO_2(s)$ [g] | $Li_5AlO_4(s)$ [g] |
|---|---|---|---|---|
| 900 | 10.0 | 19.8 | 70.2 | 0 |

(continued)

| Temp (°C) | $Li_2CO_3$(s) [g] | LiF(s) [g] | $LiAlO_2$(s) [g] | $Li_5AlO_4$(s) [g] |
|---|---|---|---|---|
| 1000 | 9.8 | 20.1 | 70.1 | 0 |
| 1100 | 9.8 | 20.2 | 70.0 | 0 |
| 1200 | 9.6 | 20.5 | 69.9 | 0 |
| 1300 | 3.2 | 18.9 | 57.0 | 12.6 |
| 1400 | 2.0 | 17.5 | 56.4 | 14.8 |
| 1500 | 0.7 | 14.1 | 55.9 | 17.2 |
| 1600 | 0 | 0 | 55.5 | 18.5 |

[Table 5]

| Temp (°C) | $Li_2CO_3$(s) [g] | LiF(s) [g] | $LiAlO_2$(s) [g] | $Li_5AlO_4$(s) [g] |
|---|---|---|---|---|
| 900 | 15.0 | 24.9 | 50.3 | 9.8 |
| 1000 | 14.8 | 24.9 | 50.2 | 10.1 |
| 1100 | 14.7 | 25.0 | 50.2 | 10.1 |
| 1200 | 14.6 | 25.5 | 49.9 | 10.0 |
| 1300 | 4.7 | 23.3 | 45.4 | 15.6 |
| 1400 | 3.7 | 21.3 | 44.9 | 17.2 |
| 1500 | 2.1 | 16.2 | 44.2 | 19.6 |
| 1600 | 0 | 0 | 43.3 | 22.8 |

[Table 6]

| Temp (°C) | $Li_2CO_3$(s) [g] | LiF(s) [g] | $LiAlO_2$(s) [g] | $Li_5AlO_4$(s) [g] |
|---|---|---|---|---|
| 900 | 25.2 | 25.1 | 24.8 | 24.9 |
| 1000 | 25.1 | 25.3 | 24.7 | 24.9 |
| 1100 | 25.2 | 25.2 | 24.8 | 24.8 |
| 1200 | 24.9 | 25.3 | 25.1 | 24.7 |
| 1300 | 10.3 | 18.8 | 18.4 | 27.2 |
| 1400 | 7.9 | 15.2 | 17.4 | 31.6 |
| 1500 | 3.6 | 9.6 | 15.4 | 39.7 |
| 1600 | 0 | 0 | 13.8 | 46.3 |

[Table 7]

| Temp (°C) | $Li_2CO_3$(s) [g] | LiF(s) [g] | $LiAlO_2$(s) [g] | $Li_5AlO_4$(s) [g] |
|---|---|---|---|---|
| 900 | 34.8 | 25.4 | 11 | 28.8 |
| 1000 | 34.7 | 25.2 | 11.6 | 28.5 |
| 1100 | 34.9 | 25.5 | 10.8 | 28.8 |
| 1200 | 35.1 | 24.9 | 12.1 | 27.9 |
| 1300 | 31.1 | 17.9 | 10.8 | 12.7 |
| 1400 | 25.6 | 14.8 | 9.4 | 20.4 |
| 1500 | 14.2 | 9.3 | 8.8 | 32.6 |

(continued)

| Temp (°C) | $Li_2CO_3(s)$ [g] | LiF(s) [g] | $LiAlO_2(s)$ [g] | $Li_5AlO_4(s)$ [g] |
|---|---|---|---|---|
| 1600 | 12.9 | 0 | 7.4 | 33.35 |

Referring to Tables 3 to 7, it may be confirmed that, as the heat treatment temperature increases under the same oxygen concentration conditions, the LiF concentration increases and then rapidly decreases. Specifically, it may be confirmed that, as the heat treatment temperature increases, LiF at 1,300°C is partially gasified, resulting in a decrease in the amount of LiF produced. More specifically, it may be confirmed that the content of LiF at 1,600°C is 0. It was confirmed that when the temperature increased excessively under the same oxygen concentration conditions, it was difficult to secure the amount of LiF produced as LiF vaporized, resulting in a decrease in actual yield of lithium. Therefore, it was confirmed that when the heat treatment temperature was 1,500°C or lower under the same oxygen concentration conditions, the vaporization of LiF was suppressed, resulting in an increase in actual yield of lithium. In addition, referring to Tables 3 to 5, it may be confirmed that the production of $Li_5AlO_4$ is promoted as the oxygen concentration increases under the same temperature conditions. In contrast, referring to Tables 6 and 7, it was confirmed that when the oxygen partial pressure was 1.0% or more, the total amount of $LiAlO_2$-$Li_5AlO_4$ produced decreased as the production of $Li_2CO_3$ was stabilized.

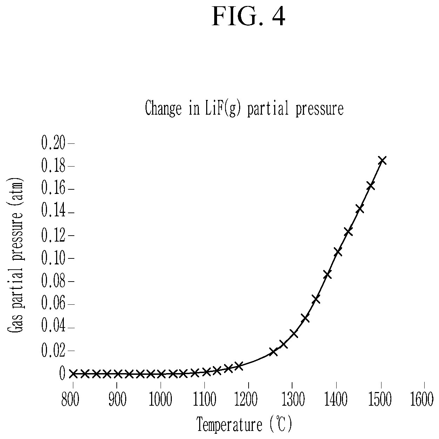

FIG. 4 illustrates a change in LiF(g) partial pressure in a high-temperature heat treatment according to an exemplary embodiment of the present disclosure.

Referring to FIG. 4, it may be confirmed that in the high-temperature heat treatment, the vaporization phenomenon of LiF increases as the temperature increases. Specifically, it may be confirmed that lithium is not easily recovered at 1,300°C or higher due to the vaporization phenomenon of LiF.

Referring to Tables 3 to 7 and FIG. 4, it was confirmed that when the high-temperature heat treatment was performed at 1,100°C or higher, and specifically, 1,300°C or higher, LiF and $Li_2CO_3$ were minimized, and $Li_5AlO_4$ and $LiAlO_2$ were maximized. As described above, it may be confirmed that when the high-temperature heat treatment is performed in a temperature range of 1,100 to 1,500°C, and at the same time, is performed in a gas atmosphere having an oxygen concentration of 0.4 to 0.8%, the LiF vaporization phenomenon is suppressed, and the production of $LiAlO_2$ and $Li_5AlO_4$ is promoted.

Table 8 shows the content ratios of $LiAlO_2$ and $Li_5AlO_4$ according to the content of oxygen under high-temperature heat treatment conditions of 1,600°C.

[Table 8]

| Temp (°C) | Content of oxygen (%) | Leaching rate in sulfuric acid (%), 1 molar concentration | $LiAlO_2(s)$ [g] | $Li_5AlO_4(s)$ [9] |
|---|---|---|---|---|
| 1600 | 0.4 | 97.9 | 70.2 | 8.48 |
| | 0.6 | 98.1 | 55.5 | 18.5 |
| | 0.8 | 96.8 | 43.3 | 22.8 |
| | 1.0 | 97.2 | 13.8 | 46.3 |

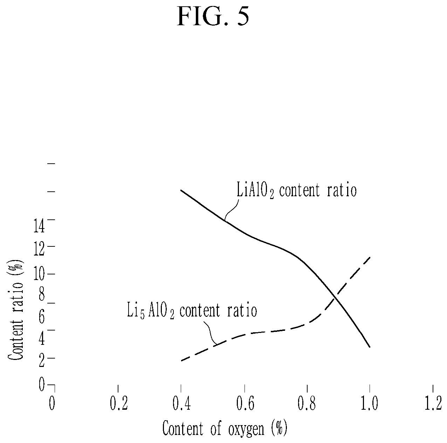

FIG. 5 illustrates content ratios of $LiAlO_2$ and $Li_5AlO_4$ according to a content of oxygen in a high-temperature heat treatment at 1,600°C according to an exemplary embodiment of the present disclosure. Referring to the content ratios shown in Table 8 and FIG. 5, it was confirmed that the amount of $Li_5AlO_4$ produced increased as the oxygen content ratio increased under the same temperature conditions. In addition, when the leaching rates in sulfuric acid of a mixture of $LiAlO_2$ and $Li_5AlO_4$ produced under the same temperature conditions were compared, it was confirmed that the leaching rates were at a similar level even when the content of $Li_5AlO_4$ was high. Therefore, it was confirmed that since the leaching rates were at a similar level, and thus, the conditions for suppressing LiF vaporization while producing mainly $LiAlO_2$ or $Li_5AlO_4$ were required.

## <EH-pH Diagram of Li-Al-$H_2$O (Pourbaix Diagram)>

FIG. 6 illustrates a Li-Al-$H_2$O EH-pH diagram according to an exemplary embodiment of the present disclosure.

The EH-pH diagram is a graph showing the relationship between pH and the potential at which metals and metal ions in an aqueous solution are present in a thermodynamically stable state. The EH-pH diagram in FIG. 6 is a graph measured at 25°C.

Referring to FIG. 6, it was confirmed that the standard electrode potentials of Al and Li were -1.66 and -3.04, respectively, and Li and Al were present as $Li^+$ and $Al^{3+}$ ions, respectively, under conditions of strong acidity with a pH of 4 or lower, such as sulfuric acid, and a potential of -0.2 V or lower.

Specifically, in the case of the compounds such as $Li_2O$ and $Al_2O_3$, it may be confirmed that Li and Al ions are easily ionized in a low pH strong acid such as sulfuric acid, and exhibit a form that is easy to form a complex with $SO_4^{2-}$; thus, the leaching rate is high regardless of the type of compound. In addition, it was confirmed that in the high-temperature heat treatment, a large amount of Li was lost due to the vaporization of LiF(g) by increasing the temperature. Accordingly, it was confirmed that a high-temperature heat treatment at 1,500°C or lower was preferable to promote the production of $LiAlO_2$ and $Li_5AlO_4$ and improving the actual yield of Li while suppressing the vaporization of LiF.

**<Expression of Relation of Li-Al-O Compound>**

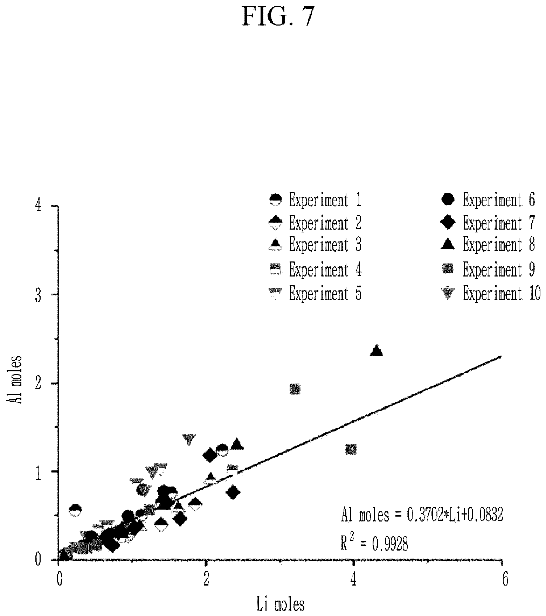

FIG. 7 illustrates a graph for deriving an expression of relation according to a molar ratio of Li and Al in a Li-Al-O compound according to an exemplary embodiment of the present disclosure.

Referring to FIG. 7, when the battery is subjected to a heat treatment at a high temperature after going through freezing at an extremely low temperature, it may be confirmed that the molar ratio of Li and Al of the Li-Al-O compound produced at 900°C or higher satisfies the following expression of relation.

<Expression of Relation>

$$[Al] = 0.3702 \times [Li] + 0.0832 \pm 0.5$$

[Al] and [Li] represent moles of Al and Li, respectively.

Through the expression of relation, it was confirmed that elements having strong oxidizing power at a high temperature, such as Li and Al, produced a reaction product such as $LiAlO_2$ or $Li_5AlO_4$, which is stable at a high temperature. As described above, it was confirmed that, during the high-temperature heat treatment, the reaction between an Al cover or Al current collector of a LiB battery and Li in a cathode material stably occurred according to the above expression of relation, and that, as the expression of relation was satisfied, the recovery rate of Li was improved.

**<Analysis of Produced Lithium Compounds>**

**Analysis of Components and Crystal Phase Ratios of Lithium Compounds**

Referring to Table 9, it was confirmed that, in the high-temperature heat treatment of the present disclosure, as the temperature and oxygen concentration were controlled, the components and crystal phase ratios were exhibited differently. The crystal phase ratios are analyzed based on the quantitative XRD results, mean the ratios when the crystal phases are 100%, and may be determined identically to wt%.

[Table 9]

| Classification | Process condition | | Component [%] | | | | Crystal phase ratio [%] | | | | Formula |
|---|---|---|---|---|---|---|---|---|---|---|---|
| | Temperature [°C] | Oxygen concentration [%] | Li | Al | C | F | $LiAlO_2$ | $Li_5AlO_4$ | $Li_2CO_3$ | LiF | $([LiAlO_2]^+[Li_5AlO_4])$ $/([Li_2CO_3]+[LiF])$ |
| Experimental Example 1 | 1500 | 0.4 | 14.15 | 31.29 | 2.54 | 3.33 | 70.9 | 9.7 | 1.9 | 9.5 | 7.07 |
| Experimental Example 2 | | 0.6 | | | | | 57.8 | 19.8 | 1.2 | 12.2 | 5.79 |
| Experimental Example 3 | | 0.8 | | | | | 46.1 | 20.6 | 3.6 | 14.7 | 3.64 |
| Comparative Example 1 | | 1.0 | | | | | 18.1 | 42.1 | 4.8 | 7 | 5.10 |
| Experimental Example 4 | 1100 | 0.4 | 13.56 | 32.7 | 4.64 | 3.82 | 74.8 | 0 | 10.1 | 15.1 | 2.97 |
| Experimental Example 5 | | 0.6 | | | | | 70.2 | 0 | 9.8 | 19.8 | 2.37 |
| Experimental Example 6 | | 0.8 | | | | | 52.3 | 8.7 | 14.2 | 24.5 | 1.58 |
| Comparative Example 2 | | 1.0 | | | | | 26.1 | 22.1 | 24.6 | 27.2 | 0.93 |

EP 4 603 457 A1

Referring to Table 9, it was confirmed that, in the high-temperature heat treatment of the present disclosure, when the temperature and oxygen concentration were controlled to the ranges of the present disclosure, the production of $LiAlO_2$ and $Li_5AlO_4$ was promoted, the vaporization of LiF was suppressed, and the actual yield of Li was improved. Specifically, referring to Experimental Examples 1 to 3 and Comparative Example 1, it was confirmed that when the oxygen concentration was lower than 1.0 vol%, the production of $LiAlO_2$ and $Li_5AlO_4$ was promoted. In addition, through Experimental Examples 1 to 3 and 4 to 6, it was confirmed that the vaporization of LiF was suppressed, and the actual yield of Li was improved.

**Analysis of Components and Crystal Phase Ratios of Lithium Compounds**

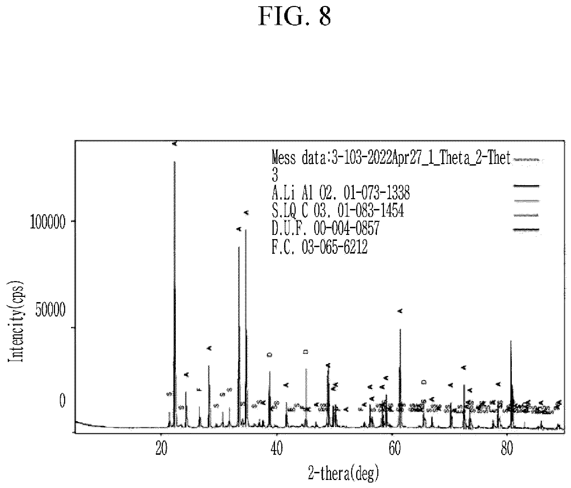

FIG. 8 illustrates XRD analysis results of the lithium compounds according to an exemplary embodiment of the present disclosure.

FIG. 8 illustrates the components and XRD analysis results of the lithium compounds produced after the shredded material obtained through freezing and shredding without brine discharge was subjected to the high-temperature heat treatment at 1,300°C. It was confirmed that the lithium compounds produced after the high-temperature heat treatment were composed of crystalline phases of $LiAlO_2$, $Li_2CO_3$, and LiF, and the crystalline phase ratio of $LiAlO_2$ was 12% or more.

Table 10 shows the components and XRD analysis results of the lithium compounds produced when the oxygen concentration was controlled at temperatures of 1,100°C and 1,500°C. Specifically, Table 10 shows the XRD peak values of the experimental examples and the comparative examples of Table 9.

[Table 10]

| Classification | Process condition | | XRD peak | | | Crystal phase ratio [%] | | | |
|---|---|---|---|---|---|---|---|---|---|
| | Temperature [°C] | Oxygen concentration [%] | I(A) | I(B) | Intensity ratio [I(A)/I(B)] | $LiAlO_2$ | $Li_5AlO_4$ | $Li_2CO_3$ | LiF |
| Experimental Example 1 | 1500 | 0.4 | 1462 | 1121 | 1.3 | 70.9 | 9.7 | 1.9 | 9.5 |
| Experimental Example 2 | | 0.6 | 1082 | 1198 | 0.9 | 57.8 | 19.8 | 1.2 | 12.2 |
| Experimental Example 3 | | 0.8 | 924 | 1318 | 0.7 | 46.1 | 20.6 | 3.6 | 14.7 |
| Comparative Example 1 | | 1.0 | 435 | 1442 | 0.3 | 18.1 | 42.1 | 4.8 | 7 |
| Experimental Example 4 | 1100 | 0.4 | 1621 | 1348 | 1.2 | 74.8 | 0 | 10.1 | 15.1 |
| Experimental Example 5 | | 0.6 | 1581 | 1432 | 1.1 | 70.2 | 0 | 9.8 | 19.8 |
| Experimental Example 6 | | 0.8 | 1017 | 1282 | 0.8 | 52.3 | 8.7 | 14.2 | 24.5 |
| Comparative Example 2 | | 1.0 | 852 | 1710 | 0.5 | 26.1 | 22.1 | 24.6 | 27.2 |

Referring to Table 10, it was confirmed that the value of I(A)/I(B), which is an intensity ratio, in the XRD peak value was within a range of 0.1 to 1.5. For a detailed description of the intensity ratio, the intensity ratio described above may be referred to. Although the preferred exemplary examples have been described in detail above, the scope of the present disclosure is not limited thereto, and various alternations and modifications by those skilled in the art using the basic concept defined in the following claims also fall within the scope of the present disclosure.

**Claims**

1.   A composition including lithium-containing compounds, the composition comprising lithium compounds including

$LiAlO_2$; and at least one of $Li_2CO_3$, LiF, and $Li_5AlO_4$,
wherein a content of $LiAlO_2$ is 12% or more with respect to 100 wt% of a total weight of the composition.

2. The composition including lithium-containing compounds of claim 1, wherein:
the composition including lithium-containing compounds is recovered from a waste battery.

3. The composition including lithium-containing compounds of claim 1, wherein:
contents of $Li_2CO_3$, LiF, and $Li_5AlO_4$ are 30% or less, 30% or less, and 40% or less, respectively, in terms of wt%.

4. The composition including lithium-containing compounds of claim 1, wherein:
a total content of $Li_2CO_3$ and LiF satisfies 50% or less.

5. The composition including lithium-containing compounds of claim 1, wherein:
the composition including lithium-containing compounds satisfies the following Expression 1:

<Expression 1>

$$3.0 \leq ([LiAlO_2] + [Li_5AlO_4])/([LiF] + [Li_2CO_3])) \leq 10.0$$

$[LiAlO_2]$, $[Li_5AlO_4]$, $[LiF]$, and $[Li_2CO_3]$ represent crystal phase ratios of $LiAlO_2$, $Li_5AlO_4$, LiF, and $Li_2CO_3$, respectively.

6. The composition including lithium-containing compounds of claim 1, wherein:
the composition including lithium-containing compounds satisfies the following Expression 2:

<Expression 2>

$$0.1 \leq I_A/I_B \leq 1.5$$

$I_A$ represents a peak intensity value of $2\theta = 21° \pm 0.5°$ of $LiAlO_2$ product, and $I_B$ represents a peak intensity value of $2\theta = 32.6° \pm 0.4°$ of $LiAlO_2$ product.

7. The composition including lithium-containing compounds of claim 1, wherein:
the composition including lithium-containing compounds satisfies the following Expression 3:

<Expression 3>

$$[Al] = 0.3702 \times [Li] + 0.0832 \pm 0.5$$

$[Al]$ and $[Li]$ represent moles of Al and Li, respectively.

8. A battery processing method comprising:

preparing a battery;
shredding the battery into a battery shredded material; and
performing a high-temperature heat treatment on the battery shredded material,
wherein the high-temperature heat treatment is performed at a temperature of 1,100 to 1,500°C in a gas atmosphere having an oxygen concentration of 0.4 to 0.8%.

9. The battery processing method of claim 8, wherein:

the preparing of the battery includes freezing the battery, and
the freezing of the battery satisfies the following Expression 4:

<Expression 4>

Minimum cooling time (Hr) = A × (W$^{0.33}$)

A represents $4 \times e^{(-0.02 \times dT)}$, W represents a battery weight (Kg), dT represents | external cooling temperature - target temperature |, and | | represents an absolute value.

10. The battery processing method of claim 9, wherein:
the freezing of the battery includes cooling the battery to -150°C to -20°C.

11. The battery processing method of claim 8, wherein:

the preparing of the battery includes
performing forced discharge on the battery.

12. The battery processing method of claim 8, further comprising, after the high-temperature heat treatment, obtaining a composition including lithium compounds remaining after separating a nickel alloy through magnetic separation.

13. The battery processing method of claim 12, further comprising,
recovering lithium by leaching the composition including lithium compound with an acidic solution.

14. The battery processing method of claim 13, wherein:
the acidic solution satisfies a pH of 4 or lower.

15. The battery processing method of claim 13, wherein:
the composition including lithium compounds obtained by the high-temperature heat treatment has a leaching rate of 95% or more in an acidic solution having a pH of 4 or lower.

16. The battery processing method of claim 8, wherein:
a composition including lithium compounds obtained by the high-temperature heat treatment satisfies the following Expression 1:

<Expression 1>

$$3.0 \leq ([LiAlO_2] + [Li_5AlO_4])/([LiF] + [Li_2CO_3]) \leq 10$$

$[LiAlO_2]$, $[Li_5AlO_4]$, $[LiF]$, and $[Li_2CO_3]$ represent crystal phase ratios of $LiAlO_2$, $Li_5AlO_4$, $LiF$, and $Li_2CO_3$, respectively.

17. The battery processing method of claim 8, wherein:
lithium compounds obtained by the high-temperature heat treatment satisfy the following Expression 3:

<Expression 3>

$$[Al] = 0.3702 \times [Li] + 0.0832 \pm 0.5$$

$[Al]$ and $[Li]$ represent moles of Al and Li, respectively.

FIG. 1

FIG. 2

FIG. 3A

FIG. 3B

FIG. 3C

FIG. 3D

FIG. 4

Change in LiF(g) partial pressure

# FIG. 5

FIG. 6

FIG. 7

# FIG. 8

## INTERNATIONAL SEARCH REPORT

| International application No. |
|---|
| **PCT/KR2023/015649** |

### A. CLASSIFICATION OF SUBJECT MATTER

**C01F 7/043**(2022.01)i; **C01D 15/04**(2006.01)i; **C01D 15/08**(2006.01)i; **H01M 10/54**(2006.01)i; **H01M 10/052**(2010.01)i; **C22B 26/12**(2006.01)i; **B02C 23/08**(2006.01)i; **B03C 1/02**(2006.01)i

According to International Patent Classification (IPC) or to both national classification and IPC

### B. FIELDS SEARCHED

Minimum documentation searched (classification system followed by classification symbols)

C01F 7/043(2022.01); B02C 19/00(2006.01); C22B 1/00(2006.01); C22B 26/12(2006.01); C22B 7/00(2006.01); H01M 10/052(2010.01); H01M 10/0525(2010.01); H01M 10/54(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐배터리(waste battery), 가열(heating), 산소(oxygen), 냉동(freeze), 방전(discharge), 회수(recovery)

### C. DOCUMENTS CONSIDERED TO BE RELEVANT

| Category* | Citation of document, with indication, where appropriate, of the relevant passages | Relevant to claim No. |
|---|---|---|
| Y | KR 10-1883100 B1 (INDUSTRY-ACADEMIC COOPERATION FOUNDATION, YONSEI UNIVERSITY) 27 July 2018 (2018-07-27)<br>See claims 1-7; and paragraph [0055]. | 1-17 |
| Y | KR 10-2022-0038442 A (BASF SE) 28 March 2022 (2022-03-28)<br>See claims 1 and 8-10; and paragraph [0060]. | 1-17 |
| Y | CN 114606386 A (NORTHEASTERN UNIVERSITY) 10 June 2022 (2022-06-10)<br>See claim 1. | 7-17 |
| Y | KR 10-2022-0135176 A (POSCO) 06 October 2022 (2022-10-06)<br>See claims 1 and 4; paragraph [0270]; and table 10. | 9-10,13-15 |
| A | KR 10-2452645 B1 (KEN, Gi-Chang) 07 October 2022 (2022-10-07)<br>See entire document. | 1-17 |

☐ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 January 2024** | **19 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015649**

| Patent document cited in search report | | | Publication date (day/month/year) | Patent family member(s) | | | Publication date (day/month/year) |
|---|---|---|---|---|---|---|---|
| KR | 10-1883100 | B1 | 27 July 2018 | | None | | |
| KR | 10-2022-0038442 | A | 28 March 2022 | AU | 2020-321474 | A1 | 17 February 2022 |
| | | | | AU | 2020-323235 | A1 | 17 February 2022 |
| | | | | AU | 2020-323677 | A1 | 17 February 2022 |
| | | | | CA | 3144711 | A1 | 04 February 2021 |
| | | | | CA | 3144716 | A1 | 04 February 2021 |
| | | | | CA | 3144899 | A1 | 04 February 2021 |
| | | | | CN | 114174545 | A | 11 March 2022 |
| | | | | CN | 114207161 | A | 18 March 2022 |
| | | | | CN | 114207162 | A | 18 March 2022 |
| | | | | EP | 4004244 | A1 | 01 June 2022 |
| | | | | EP | 4004245 | A1 | 01 June 2022 |
| | | | | EP | 4004246 | A1 | 01 June 2022 |
| | | | | JP | 2022-541321 | A | 22 September 2022 |
| | | | | JP | 2022-542362 | A | 03 October 2022 |
| | | | | JP | 2022-542879 | A | 07 October 2022 |
| | | | | KR | 10-2022-0038440 | A | 28 March 2022 |
| | | | | KR | 10-2022-0038441 | A | 28 March 2022 |
| | | | | MX | 2022001039 | A | 10 February 2022 |
| | | | | MX | 2022001040 | A | 10 February 2022 |
| | | | | MX | 2022001041 | A | 10 February 2022 |
| | | | | TW | 202105823 | A | 01 February 2021 |
| | | | | TW | 202107764 | A | 16 February 2021 |
| | | | | TW | 202111131 | A | 16 March 2021 |
| | | | | US | 2022-0251681 | A1 | 11 August 2022 |
| | | | | US | 2022-0274841 | A1 | 01 September 2022 |
| | | | | US | 2022-0352570 | A1 | 03 November 2022 |
| | | | | WO | 2021-018778 | A1 | 04 February 2021 |
| | | | | WO | 2021-018788 | A1 | 04 February 2021 |
| | | | | WO | 2021-018796 | A1 | 04 February 2021 |
| CN | 114606386 | A | 10 June 2022 | CN | 114606386 | B | 28 April 2023 |
| KR | 10-2022-0135176 | A | 06 October 2022 | CN | 117256065 | A | 19 December 2023 |
| | | | | WO | 2022-211446 | A1 | 06 October 2022 |
| KR | 10-2452645 | B1 | 07 October 2022 | | None | | |

Form PCT/ISA/210 (patent family annex) (July 2022)